# FASCICULE DE BREVET EUROPEEN

(11) **EP 3 894 661 B1**
(45) Date de publication et mention de la délivrance du brevet: **25.01.2023**
(21) Numéro de dépôt: 19839374.6
(22) Date de dépôt: 10.12.2019
(51) Int. Cl.: F01D 5/14

(54) **AUBE DE TURBOMACHINE À LOI DE FLÈCHE À FORTE MARGE AU FLOTTEMENT**
TURBOMASCHINENSCHAUFEL MIT EINEM SCHWINGUNGSGESETZ MIT HOHER FLATTERTOLERANZ
TURBOMACHINE BLADE HAVING A SWEEP LAW WITH HIGH FLUTTER MARGIN

(30) Priorité: 11.12.2018 FR 1872700
(43) Date de publication de la demande: 20.10.2021
(73) Titulaire: SAFRAN AIRCRAFT ENGINES, 75015 Paris (FR)
(72) Inventeur: GONDRE, Guillaume Pascal Jean-Charles, 77550 MOISSY-CRAMAYEL (FR); DE CACQUERAY-VALMENIER, Nicolas Pierre Alain Edme, 77550 MOISSY-CRAMAYEL (FR); CAVAREC, Mickaël, 77550 MOISSY-CRAMAYEL (FR); DIEUDONNE, Sadim, 77550 MOISSY-CRAMAYEL (FR)
(74) Mandataire: Regimbeau
(86) Numéro de dépôt international: PCT/FR2019/053004
(87) Numéro de publication internationale: WO 2020/120897

(56) Documents cités:
- WO-A1-2016/124861
- CN-A- 1 757 883
- US-A1- 2018 100 399

## Description

### DOMAINE TECHNIQUE GÉNÉRAL ET ART ANTÉRIEUR

L'invention concerne le domaine des aubes de turbomachine et plus particulièrement celui des aubes de rotor de turbomachine.

L'invention vise notamment à être utilisée dans des soufflantes au sein d'un turboréacteur ou d'une turbomachine.

Une turbomachine comprend au moins un aubage, comme par exemple une soufflante, qui comporte une pluralité d'aubes arrangées radialement autour d'un axe central, par exemple autour d'un disque.

Un tel aubage forme soit un rotor, quand il s'agit d'un aubage mobile ou d'un disque aubagé, soit un stator.

Les aubes peuvent être considérées comme des excroissances par rapport à un anneau continu. Deux aubes voisines et l'anneau définissent un couloir d'écoulement d'air.

L'extrémité proximale de chaque aube par rapport à l'axe central est habituellement dénommée pied d'aube. En particulier, le pied d'aube est considéré ici comme la partie de l'aube située au-dessus de l'anneau.

L'extrémité distale est habituellement dénommée tête d'aube. La distance entre le pied et la tête d'aube est connue comme hauteur d'aube.

Entre le pied et la tête d'aube, l'aube peut être représentée de façon théorique par un empilement de sections ou profils aérodynamiques perpendiculaires à un axe radial Z.

L'aube est une pièce complexe à élaborer car elle est impliquée à la fois dans des aspects aérodynamiques, mécaniques et acoustiques de l'aubage et de la turbomachine.

La conception de l'aube et de l'aubage nécessite de travailler simultanément sur les performances aérodynamiques, la tenue mécanique et la réduction des masses, bruit et coût.

La conception doit garantir une durée de vie minimum de l'aube et du disque sur lequel sont fixées les aubes.

La conception doit garantir une tenue vibratoire minimum de l'aubage c'est-à-dire une résistance suffisante aux vibrations, ou un niveau de vibration acceptable pour assurer la tenue mécanique.

L'aubage doit présenter une tenue à l'ingestion de corps étrangers et une tenue à la perte d'aube c'est-à-dire une résistance de l'aubage aux situations où une aube se détache partiellement ou entièrement du disque.

Le phénomène de flottement doit être pris en compte durant la conception de l'aube et de l'aubage.

Le flottement est un couplage aéromécanique dû au mouvement relatif de l'air par rapport à la structure des aubes et de l'aubage. Le flottement est un phénomène auto-entretenu, la modification du mouvement de la structure solide modifiant l'écoulement du fluide et la modification de l'écoulement du fluide générant des forces sur la structure solide. Le flottement peut rapidement s'amplifier et aboutir à la rupture d'une aube de la soufflante, voire un endommagement du moteur.

Le flottement est fortement lié au dessin de la structure, de sorte qu'il est difficile d'éliminer ou même de limiter un phénomène de flottement une fois qu'il a été détecté dans le fonctionnement d'une soufflante.

Il reste alors la possibilité d'interdire certaines zones de fonctionnement pour limiter les risques liés au flottement, mais cela réduit nécessairement les conditions de vol dans lesquelles la soufflante peut fonctionner.

Le document US 2018/0100399 A1 présente une méthode pour profiler une aube de rotor de turbine en prenant en compte le phénomène de flottement.

Il existe donc un besoin pour une aube et un aubage pour lesquelles la zone de fonctionnement où apparaît le flottement est la plus éloignée possible de la zone de fonctionnement nominale, c'est-à-dire une aube et un aubage qui présente une marge au flottement la plus importante possible.

### PRÉSENTATION GÉNÉRALE DE L'INVENTION

Un but général de l'invention est de pallier les inconvénients des aubes et des soufflantes de l'art antérieur.

Notamment, un but de l'invention est de proposer une solution pour augmenter la marge au flottement.

Un autre but encore est de proposer une solution pour augmenter la marge au flottement sans augmenter la masse de l'aube.

Le but est atteint dans le cadre de la présente invention grâce à une aube de rotor de turbomachine selon la revendication 1.

Un tel dispositif est avantageusement complété par les différentes caractéristiques suivantes prises seules ou en combinaison :
- le rapport entre une flèche max et une corde à mi-hauteur de l'aube est compris entre 30% et 35%, et vaut de préférence de l'ordre d'un tiers du rapport entre une flèche max et une corde en pied d'aube,
- laquelle le rapport entre une flèche max et une corde en tête d'aube soit compris entre 30% et 35%, et vaut de préférence de l'ordre d'un tiers du rapport entre une flèche max et une corde en pied d'aube,
- le rapport entre une flèche max et une corde en pied d'aube est compris entre 10% et 20% et de préférence entre 14% et 17%,
- le rapport entre une flèche max et une corde à mi-hauteur d'aube est compris entre 4% et 7%, de préférence entre 4,7% et 5,7%,
- le rapport entre une flèche max et une corde en tête d'aube est compris entre 4% et 7%, de préférence entre 4,7% et 5,7%,
- la variation selon la hauteur du rapport entre la flèche max et la corde de chaque section de l'aube est comprise entre :
- une première fonction affine par morceaux définie
   ∘ par un premier segment de droite défini par un rapport entre une flèche max et une corde en pied d'aube égal à 14% et un rapport entre une flèche max et une corde à mi-hauteur d'aube égal à 4,7%, et
   ∘ par un deuxième segment de droite défini par un rapport entre une flèche max et une corde à mi-hauteur d'aube égal à 4,7% et un rapport entre une flèche max et une corde en tête d'aube égal à 4,7%, et
- une deuxième fonction affine par morceaux définie par :
   ∘ par un troisième segment de droite défini par un rapport entre une flèche max et une corde en pied d'aube égal à 17% et un rapport entre une flèche max et une corde à mi-hauteur d'aube égal à 5,7%, et
   ∘ par un quatrième segment de droite défini par un rapport entre une flèche max et une corde à mi-hauteur d'aube égal à 5,7% et un rapport entre une flèche max et une corde en tête d'aube égal à 5,7%.
- la variation selon la hauteur du rapport entre la flèche max et la corde est une fonction définie par deux segments de droite d'une part entre le pied et la mi-hauteur de l'aube, d'autre part entre la mi-hauteur et la tête d'aube,
- le rapport entre une flèche max et une corde d'une section de l'aube diminue lorsque la hauteur de la section augmente depuis le pied d'aube vers la mi-hauteur d'aube, puis garde une valeur quasi-constante du rapport entre une flèche max et une corde entre la mi-hauteur d'aube et la tête d'aube,

L'invention concerne également une soufflante de turbomachine comportant une pluralité d'aubes de rotor telles que décrites plus haut.

L'invention concerne également une turbomachine qui comprend une telle soufflante.

### PRÉSENTATION DES FIGURES

D'autres caractéristiques et avantages de l'invention ressortiront encore de la description qui suit, laquelle est purement illustrative et non limitative, et doit être lue en regard des dessins annexés sur lesquels :
La figure 1 est une coupe longitudinale schématique d'une turbomachine.
La figure 2 est une vue schématique en perspective d'un rotor de soufflante de turbomachine.
La figure 3 est une vue schématique en perspective d'un détail du rotor de la figure 2.
La figure 4 représente de manière schématique une section d'une aube.
La figure 5 un diagramme illustrant l'évolution, entre le pied et la tête d'aube, du rapport de la flèche max sur la corde de l'aube selon l'invention.
La figure 6 représente de manière schématique des lignes de fonctionnement d'une soufflante conforme à un mode de réalisation de l'invention et d'une soufflante selon l'art antérieur.

### DESCRIPTION D'UN OU PLUSIEURS MODES DE MISE EN ŒUVRE ET DE RÉALISATION

### Turbomachine - Présentation générale

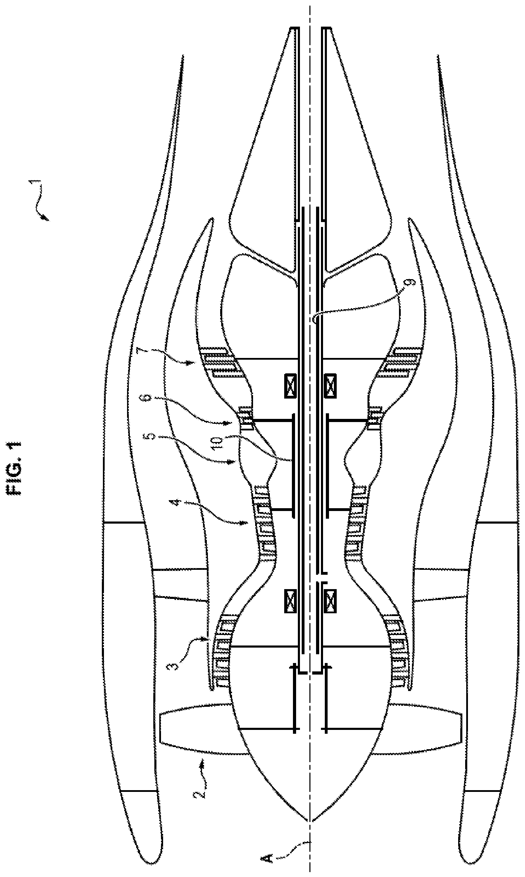

En référence à la figure 1 une turbomachine est représentée de manière schématique, plus spécifiquement un turboréacteur axial 1 à double flux. Le turboréacteur 1 illustré comporte une soufflante 2, un compresseur basse pression 3, un compresseur haute pression 4, une chambre de combustion 5, une turbine haute pression 6, et une turbine basse pression 7.

La soufflante 2 et le compresseur basse pression 3 sont reliés à la turbine basse pression 7 par un premier arbre de transmission 9, tandis que le compresseur haute pression 4 et la turbine haute pression 6 sont reliés par un deuxième arbre de transmission 10.

En fonctionnement, un écoulement d'air comprimé par les compresseurs basse et haute pression 3 et 4 alimente une combustion dans la chambre de combustion 5, dont l'expansion des gaz de combustion entraîne les turbines haute et basse pression 6, 7. A travers les arbres 9 et 10, les turbines 6, 7 actionnent ainsi la soufflante 2 et les compresseurs 3, 4. L'air propulsé par la soufflante 2 et les gaz de combustion sortant du turboréacteur 1 à travers une tuyère propulsive (non illustrée) en aval des turbines 6, 7 exercent une poussée de réaction sur le turboréacteur 1 et, à travers lui, sur un véhicule ou engin tel qu'un aéroplane (non illustré).

Chaque compresseur 3, 4 et chaque turbine 6, 7 du turboréacteur 1 comportent plusieurs étages, chaque étage étant formé par un aubage fixe ou stator, et un aubage tournant ou rotor.

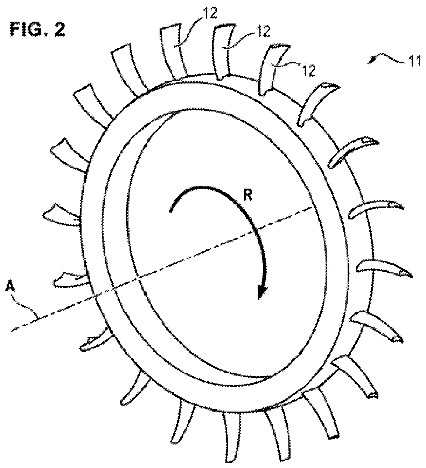

En référence à la figure 2, un rotor 11 de soufflante de turbomachine est illustré schématiquement. Ce rotor 11 comporte une pluralité d'aubes 12 arrangées radialement autour de l'axe de rotation A du rotor 11, qui est sensiblement parallèle à la direction générale d'écoulement du fluide de travail à travers le turboréacteur 1.

Les aubes 12 peuvent constituer des pièces distinctes du reste du rotor et être rapportées sur celui-ci par des moyens de fixation généralement connus dans l'état de la technique, tels que des attaches brochées ou des fixations en pied de sapin.

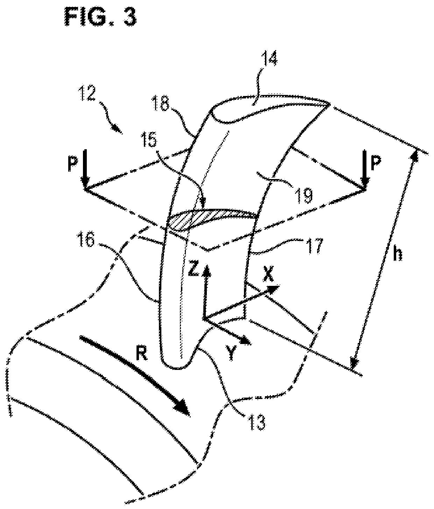

En référence à la figure 3, une vue schématique en perspective d'un détail du rotor de la figure 2 est proposée. Chaque aube 12 présente un système de référence spatial avec trois axes orthogonaux X, Y et Z.

L'axe X est parallèle à l'axe de rotation A du rotor 11, l'axe Y est tangentiel à la direction de rotation R de l'aube 12 autour de l'axe de rotation A, et l'axe Z est un axe radial suivant une direction traversant l'axe de rotation A.

Chaque aube 12 comporte un pied d'aube 13 et une tête d'aube 14 séparés par une hauteur d'aube h suivant la direction de l'axe radial Z.

Entre le pied d'aube 13 et la tête d'aube 14, l'aube 12 peut être représentée de façon théorique par un empilement de sections ou profils aérodynamiques 15 dans des plans perpendiculaires à l'axe radial Z.

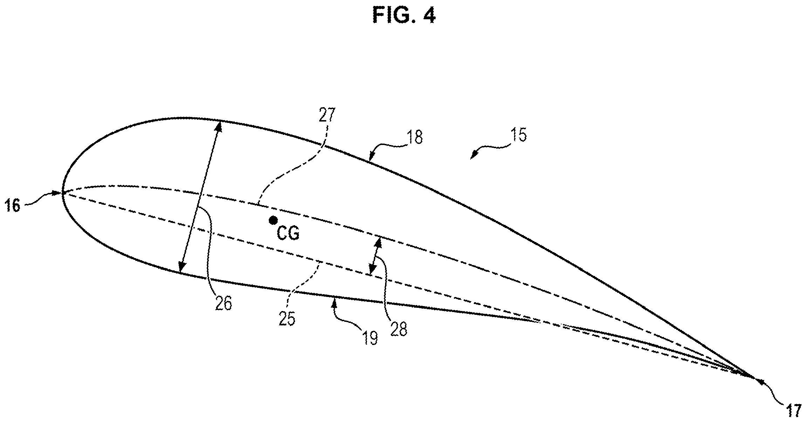

L'aube de rotor de turbomachine peut être décrite comme comportant une pluralité de sections d'aube empilées selon un axe Z entre le pied d'aube et la tête d'aube définissant entre eux la hauteur de l'aube h. Un tel plan P est représenté sur les figures 3 et 4.

L'aube 12 comporte un bord d'attaque 16 en direction amont, un bord de fuite 17 en direction aval, un extrados 18 et un intrados 19.

Chaque section d'aube peut être décrite comme comportant un bord d'attaque et un bord de fuite.

Dans un rotor de compresseur ou de soufflante, le sens de rotation R en fonctionnement normal est tel que chaque aube 12 se déplace en direction de son intrados 19.

Une section d'aube 15 est représentée de manière schématique sur la figure 4 avec une ligne de corde 25 et une ligne de cambrure 27.

La ligne de corde 25 est un segment, c'est-à-dire une portion de droite, reliant le bord d'attaque 16 et le bord de fuite 17 dans cette section 15.

Dans le présent texte, le terme « corde » seul est utilisé pour désigner la longueur du segment correspondant à la ligne de corde, c'est-à-dire la distance entre ces deux points les plus éloignés.

La ligne de cambrure 27 est une courbe égale à la moyenne entre la courbe de l'extrados 18 et la courbe de l'intrados 19 dans ladite section 15. Plus précisément, la ligne de cambrure est formée de tous les points situés à égale distance de l'extrados 18 et de l'intrados 19. La distance d'un point particulier à l'extrados (ou de l'intrados) est définie ici comme la distance minimale entre le point particulier et un point de l'extrados (ou de l'intrados).

On a également représenté par des doubles flèches sur cette figure 4 :
- l'épaisseur maximale 26 de la section (distance maximale entre l'extrados 18 et l'intrados 19) dans une direction perpendiculaire à la ligne de corde,
- la distance maximale ou flèche max 28 entre la corde 25 et la ligne de cambrure 27 ; la flèche max correspond à la longueur maximale d'un segment perpendiculaire à la ligne de corde et reliant un point de la ligne de corde et un point de la ligne de cambrure ;
- le centre de gravité CG de la section d'aube, qui est le barycentre des masses de la section d'aube. La position du centre de gravité est définie dans le plan de la section par rapport à l'axe Z, c'est-à-dire par des coordonnées selon les axes X et Y dans ladite section.

### Lois de flèche max

Les flèches max des aubes varient en fonction de la hauteur de la section qui leur correspond dans la hauteur de l'aube.

Il a été constaté par les inventeurs que des lois de flèche max spécifiques permettaient de bien meilleures marges au flottement.

C'est le cas notamment lorsque les relations suivantes sont respectées :
- le rapport entre la flèche max et la corde à mi-hauteur de l'aube est compris entre 25% et 40% du rapport entre une flèche max et une corde en pied d'aube,
- le rapport entre une flèche max et une corde en tête d'aube est compris entre 25% et 40% du rapport entre une flèche max et une corde en pied d'aube.

De meilleurs marges sont encore obtenues si le rapport entre une flèche max et une corde à mi-hauteur de l'aube est compris entre 30% et 35%, et valoir de préférence de l'ordre d'un tiers du rapport entre une flèche max et une corde en pied d'aube. De l'ordre d'un tiers signifie ici être égal à un tiers à plus ou moins un pourcent.

Egalement, le rapport entre une flèche max et une corde en tête d'aube peut être compris entre 30% et 35%, et valoir de préférence de l'ordre d'un tiers du rapport entre une flèche max et une corde en pied d'aube.

Plus précisément, la loi de flèche max peut vérifier d'autres caractéristiques contribuant elles aussi à augmenter les marges au flottement, comme par exemple :
Le rapport entre une flèche max et une corde en pied d'aube est compris entre 10% et 20% et de préférence entre 14% et 17%
Le rapport entre une flèche max et une corde à mi-hauteur d'aube est compris entre 4% et 7%, de préférence entre 4,7% et 5,7%
Le rapport entre une flèche max et une corde en tête d'aube est compris entre 4% et 7%, de préférence entre 4,7% et 5,7%

Ces caractéristiques permettent en particulier d'obtenir une évolution du rapport entre une flèche max et une corde telle qu'il y a une forte diminution du rapport entre une flèche max et une corde depuis le pied d'aube vers la mi-hauteur d'aube, puis une valeur quasi-constante du rapport entre une flèche max et une corde entre la mi-hauteur d'aube et la tête d'aube.

En variante, l'aube peut également vérifier une loi de flèche max proposée sous la forme d'encadrements :
Le rapport entre une flèche max et une corde à 0% de hauteur est compris entre les valeurs r et s.
Le rapport entre une flèche max et une corde à 50% de hauteur est compris entre les valeurs t et u.
Le rapport entre une flèche max et une corde à 100% de hauteur est compris entre les valeurs v et w.

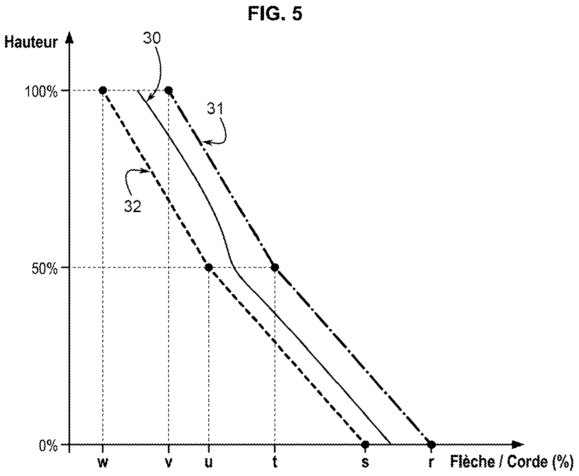

Une loi de flèche max en ce sens est illustrée sur le graphe de la figure 5, sur lequel la valeur du rapport entre une flèche max et une corde est donnée en abscisse, tandis que la hauteur de la section d'aube est fournie en ordonnée, 0% correspondant à une référence en pied d'aube, 100% correspondant à la tête d'aube. La valeur 50% de hauteur se trouve dans la zone de mi-hauteur de l'aube. Dans le présent texte, la zone de mi-hauteur de l'aube correspond à l'intervalle de hauteur entre 45% de hauteur et 55% de hauteur de l'aube.

Sur la figure 5, la loi de flèche max de l'aube est représentée par la courbe 30 en trait continu sur ce graphe. La courbe 30 est une représentation graphique de la variation selon la hauteur du rapport entre la flèche max et la corde en fonction de la hauteur.

Sur la figure 5, les six limites r, s, t, u, v et w du rapport entre une flèche max et une corde ont été placées sur l'axe des abscisses et en correspondance de ces rapports les différents pourcentages de hauteur associés sont placés sur l'axe des ordonnées.
r peut être compris entre 17% et 20% et de préférence entre 17% et 18% ;
s peut être compris entre 10% et 14% et de préférence entre 13% et 14% ;
t peut être compris entre 5,7% et 7% et de préférence entre 5,7% et 6% ;
u peut être compris entre 4% et 4,7% et de préférence entre 4,5% et 4,7% ;
v peut être compris entre 5,7% et 7% et de préférence entre 5,7% et 6% ;
w peut être compris entre 4% et 4,7% et de préférence entre 4,5% et 4,7%.

La courbe 30 en trait continu est comprise entre deux courbes limites 31 et 32, qui sont deux courbes affines par morceaux (courbes formées de portions ou segments de droites)

La courbe 31 (en pointillés mixtes) est définie en l'occurrence par deux demi-droites :
- l'une qui s'étend entre un point correspondant à une valeur de corde égale à r pour une hauteur de 0% et un point de valeur de corde égale à t pour une hauteur de 50%,
- l'autre qui s'étend entre ledit point de point de valeur de corde égale à t pour une hauteur de 50% et un point correspondant à une valeur de corde égale à v pour une hauteur de 100%.

La courbe 32 (en pointillés simples) est définie
- par une demi-droite s'étendant entre un point de valeur de corde égale à s pour une hauteur de 0% et un point correspondant à une valeur de corde égale à u pour une hauteur de 50%,
- par une demi-droite qui s'étend dudit point correspondant à une valeur de corde égale à u pour une hauteur de 50% à un point de valeur de corde égale à w pour une hauteur de 100%.

L'espace entre les deux courbes 31,32 définit un couloir, dans lequel se situe le graphe correspondant à la loi de flèche max.

Les lois de flèche max d'aube proposées correspondent à une aube dont la forme se rapproche dans sa partie supérieure de la forme d'une plaque plane. Une telle caractéristique permet d'augmenter la marge au flottement.

Selon une variante plus générale, la loi de flèche max peut vérifier d'autres caractéristiques contribuant elles aussi à augmenter les marges au flottement. Par exemple une loi de flèche max de l'aube en fonction de sa hauteur peut correspondre à la variation selon la hauteur du rapport entre la flèche max et la corde de chaque section de l'aube et être compris entre :
- une première fonction définie
   ∘ par un premier segment de droite défini par un rapport entre une flèche max et une corde en pied d'aube égal à 14% et un rapport entre une flèche max et une corde à mi-hauteur d'aube égal à 4,7%, et
   ∘ par un deuxième segment de droite défini par un rapport entre une flèche max et une corde à mi-hauteur d'aube égal à 4,7% et un rapport entre une flèche max et une corde en tête d'aube égal à 4,7%, et
- une deuxième fonction définie par
   ∘ par un troisième segment de droite défini par un rapport entre une flèche max et une corde en pied d'aube égal à 17% et un rapport entre une flèche max et une corde à mi-hauteur d'aube égal à 5,7%, et
   ∘ par un quatrième segment de droite défini par un rapport entre une flèche max et une corde à mi-hauteur d'aube égal à 5,7% et un rapport entre une flèche max et une corde en tête d'aube égal à 5,7%.

La courbe 30 qui est une représentation graphique de la variation selon la hauteur du rapport entre la flèche max et la corde est compris entre les deux représentations graphiques des fonctions telles qu'on vient de les définir.

Plus précisément, le graphe correspondant à la loi de flèche max peut varier selon deux segments de droite d'une part entre le pied et la mi-hauteur de l'aube, d'autre part entre la mi-hauteur et la tête d'aube.

De manière équivalente, la variation selon la hauteur du rapport entre la flèche max et la corde peut être une fonction définie par deux segments de droite d'une part entre le pied et la mi-hauteur de l'aube, d'autre part entre la mi-hauteur et la tête d'aube

Le graphe peut également correspondre à un rapport entre une flèche max et une corde d'une section d'aube qui diminue lorsque la hauteur de la section augmente.

En particulier, le graphe peut correspondre à un rapport entre une flèche max et une corde d'une section d'aube qui diminue fortement lorsque la hauteur de la section augmente depuis le pied d'aube vers la mi-hauteur d'aube, puis qui reste quasi constant entre la mi-hauteur d'aube et la tête d'aube.

### Lignes de fonctionnement d'une soufflante de turbomachine

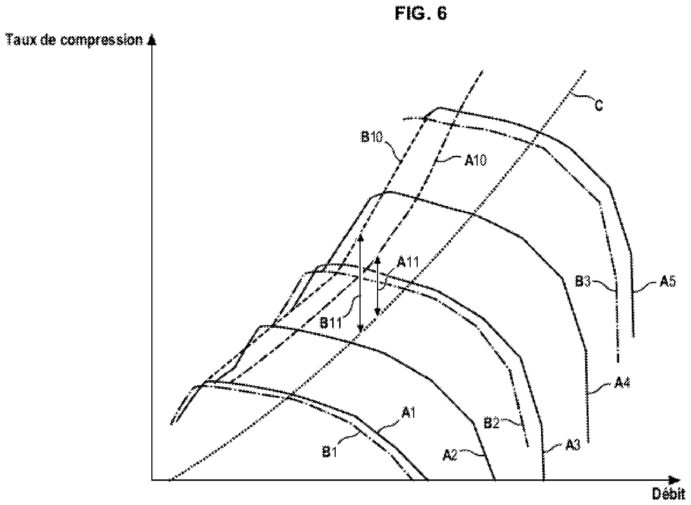

En référence à la figure 6, des lignes de fonctionnement d'une soufflante représentent de manière schématique le taux de compression en fonction du débit.

Les courbes A1, A2, A3, A4 et A5 correspondent à cinq régimes de moteur, c'est à dire cinq vitesses de rotation du moteur, impliquant des aubes et une soufflante selon l'art antérieur. Dans un régime donné, les conditions de vol imposent une position sur la courbe ou un point de fonctionnement du moteur, c'est-à-dire un couple de valeurs débit et taux de compression. Idéalement, le point de fonctionnement du moteur se situe proche de la courbe C, qui est la courbe de fonctionnement nominal.

La courbe A10 matérialise la frontière de la zone de flottement selon le même art antérieur. Les points de fonctionnement du moteur situés sur les courbes A1, A2, A3, A4 ou A5 et à gauche de la courbe A10 correspondent à un phénomène de flottement important.

La marge au flottement peut être définie comme une distance A11 entre la courbe C et la courbe A10.

La courbe B10 matérialise la frontière de la zone de flottement du moteur correspondant. La marge au flottement peut être définie comme une distance B11 entre la courbe B10 et la courbe C, courbe de fonctionnement nominal.

La distance B11 étant supérieure à la distance A11, la marge au flottement a été augmentée par rapport à l'antérieur.

Les lois de flèche max de l'aube proposées correspondent à une aube dont la forme se rapproche dans sa partie supérieure de la forme d'une plaque plane.

Une plaque plane est associée à des mouvements comprenant une forte composante de flexion et une faible composante de torsion.

Un avantage apporté par l'invention est l'augmentation de la marge au flottement sans que le comportement mécanique de l'aube ou les performances aérodynamiques de l'aube ne soient dégradés. En particulier le couplage flexion-torsion peut être diminué sans qu'il soit nécessaire d'augmenter la masse de l'aube.

## Revendications

1. Aube de rotor de turbomachine comprenant une pluralité de sections d'aube empilées selon un axe Z entre un pied d'aube et une tête d'aube définissant entre eux la hauteur de l'aube, chaque section d'aube comportant un bord d'attaque (21), un bord de fuite (22), un intrados (19) et un extrados (18), une corde (25) définie par la longueur d'une ligne de corde qui est le segment reliant le bord d'attaque (1) et le bord de fuite (2) et une flèche max (28) définie par la longueur maximale d'un segment perpendiculaire à la ligne de corde et reliant un point de la ligne de corde et un point d'une ligne de cambrure formée de tous les points situés à égale distance de l'extrados (18) et de l'intrados (19) dans la section, **caractérisée en ce que** :
- le rapport entre la flèche max et la corde à mi-hauteur de l'aube est compris entre 25% et 40% du rapport entre une flèche max et une corde en pied d'aube,
- le rapport entre une flèche max et une corde en tête d'aube soit compris entre 25% et 40% du rapport entre une flèche max et une corde en pied d'aube.

2. Aube de rotor de turbomachine selon la revendication 1 dans laquelle le rapport entre une flèche max et une corde à mi-hauteur de l'aube est compris entre 30% et 35%, et vaut de préférence de l'ordre d'un tiers du rapport entre une flèche max et une corde en pied d'aube.

3. Aube de rotor de turbomachine selon la revendication 1 ou 2 dans laquelle le rapport entre une flèche max et une corde en tête d'aube est compris entre 30% et 35%, et vaut de préférence de l'ordre d'un tiers du rapport entre une flèche max et une corde en pied d'aube.

4. Aube de rotor de turbomachine selon l'une quelconque des revendications précédentes dans laquelle le rapport entre une flèche max et une corde en pied d'aube est compris entre 10% et 20% et de préférence entre 14% et 17%.

5. Aube de rotor de turbomachine selon l'une quelconque des revendications précédentes dans laquelle le rapport entre une flèche max et une corde à mi-hauteur d'aube est compris entre 4% et 7%, de préférence entre 4,7% et 5,7%.

6. Aube de rotor de turbomachine selon l'une quelconque des revendications précédentes dans laquelle le rapport entre une flèche max et une corde en tête d'aube est compris entre 4% et 7%, de préférence entre 4,7% et 5,7%.

7. Aube de rotor de turbomachine selon l'une quelconque des revendications précédentes dans laquelle la variation selon la hauteur du rapport entre la flèche max et la corde de chaque section de l'aube est comprise entre :
- une première fonction affine par morceaux définie :
· par un premier segment de droite défini par un rapport entre une flèche max et une corde en pied d'aube égal à 14% et un rapport entre une flèche max et une corde à mi-hauteur d'aube égal à 4,7%, et
· par un deuxième segment de droite défini par un rapport entre une flèche max et une corde à mi-hauteur d'aube égal à 4,7% et un rapport entre une flèche max et une corde en tête d'aube égal à 4,7%, et
- une deuxième fonction affine par morceaux définie par :
· par un troisième segment de droite défini par un rapport entre une flèche max et une corde en pied d'aube égal à 17% et un rapport entre une flèche max et une corde à mi-hauteur d'aube égal à 5,7%, et
· par un quatrième segment de droite défini par un rapport entre une flèche max et une corde à mi-hauteur d'aube égal à 5,7% et un rapport entre une flèche max et une corde en tête d'aube égal à 5,7%.

8. Aube de rotor de turbomachine selon l'une quelconque des revendications précédentes dans laquelle la variation selon la hauteur du rapport entre la flèche max et la corde est une fonction affine par morceaux définie par deux segments de droite d'une part entre le pied et la mi-hauteur de l'aube, d'autre part entre la mi-hauteur et la tête d'aube.

9. Aube de rotor de turbomachine selon l'une quelconque des revendications précédentes dans laquelle le rapport entre une flèche max et une corde d'une section de l'aube diminue lorsque la hauteur de la section augmente depuis le pied d'aube vers la mi-hauteur d'aube, puis garde une valeur quasi-constante du rapport entre une flèche max et une corde entre la mi-hauteur d'aube et la tête d'aube.

10. Soufflante de turbomachine comportant une pluralité d'aubes de rotor selon l'une quelconque des revendications précédentes.

11. Turbomachine **caractérisée en ce qu'**elle comporte une soufflante selon la revendication 10.

## Patentansprüche

1. Rotorschaufel einer Turbomaschine mit einer Vielzahl von Schaufelabschnitten, die entlang einer Z-Achse zwischen einem Schaufelfuß und einem Schaufelkopf gestapelt sind, die zwischen sich die Höhe der Schaufel definieren, wobei jeder Schaufelabschnitt eine Vorderkante (21), eine Hinterkante (22), eine Unterseite (19) und eine Oberseite (18) aufweist, eine Sehne (25), die durch die Länge einer Sehnenlinie definiert ist, die das Segment ist, das die Vorderkante (1) und die Hinterkante (2) verbindet, und einen max. Pfeil (28), der durch die maximale Länge eines Segments definiert ist, das senkrecht zur Sehnenlinie verläuft und einen Punkt der Sehnenlinie mit einem Punkt einer Wölbungslinie verbindet, die aus allen Punkten gebildet wird, die sich in dem Abschnitt in gleichem Abstand von der Oberseite (18) und der Unterseite (19) befinden, **dadurch gekennzeichnet, dass** :
- das Verhältnis zwischen dem max. Pfeil und der Sehne auf halber Höhe der Schaufel zwischen 25 % und 40 % des Verhältnisses zwischen einem max. Pfeil und einer Sehne am Fuß der Schaufel beträgt,
- das Verhältnis zwischen einem max. Pfeil und einer Sehne am Schaufelkopf zwischen 25% und 40% des Verhältnisses zwischen einem max. Pfeil und einer Sehne am Schaufelfuß liegt.

2. Turbomaschinenrotorschaufel nach Anspruch 1, bei der das Verhältnis zwischen einem max. Pfeil und einer Sehne in der Mitte der Schaufel zwischen 30% und 35% beträgt und vorzugsweise in der Größenordnung eines Drittels des Verhältnisses zwischen einem maximalen Pfeil und einer Sehne am Schaufelfuß liegt.

3. Rotorschaufel einer Turbomaschine nach Anspruch 1 oder 2, wobei das Verhältnis zwischen einem max. Pfeil und einer Sehne am Schaufelkopf zwischen 30 % und 35 % liegt und vorzugsweise etwa ein Drittel des Verhältnisses zwischen einem maximalen Pfeil und einer Sehne am Schaufelfuß beträgt.

4. Rotorschaufel einer Turbomaschine nach einem der vorhergehenden Ansprüche, wobei das Verhältnis zwischen einem max. Pfeil und einer Sehne am Schaufelfuß zwischen 10% und 20% und vorzugsweise zwischen 14% und 17% liegt.

5. Rotorschaufel einer Turbomaschine nach einem der vorhergehenden Ansprüche, wobei das Verhältnis zwischen einem max. Pfeil und einer Sehne in der Mitte der Schaufelhöhe zwischen 4% und 7%, vorzugsweise zwischen 4,7% und 5,7%, liegt.

6. Rotorschaufel einer Turbomaschine nach einem der vorhergehenden Ansprüche, bei der das Verhältnis zwischen einem max. Pfeil und einer Sehne am Schaufelkopf zwischen 4% und 7%, vorzugsweise zwischen 4,7% und 5,7%, liegt.

7. Rotorschaufel einer Turbomaschine nach einem der vorhergehenden Ansprüche, bei der die Höhenänderung des Verhältnisses zwischen dem max. Pfeil und der Sehne jedes Schaufelabschnitts zwischen :
- einer ersten stückweise affinen Funktion, die definiert ist:
· durch ein erstes Geradensegment, das durch ein Verhältnis zwischen einem max. Pfeil und einer Sehne am Schaufelfuß gleich 14% und ein Verhältnis zwischen einem max. Pfeil und einer Sehne auf halber Schaufelhöhe gleich 4,7% definiert ist, und
· durch ein zweites Geradensegment, das durch ein Verhältnis zwischen einem max. Pfeil und einer Sehne in halber Schaufelhöhe gleich 4,7% und ein Verhältnis zwischen einem max. Pfeil und einer Sehne am Schaufelkopf gleich 4,7% definiert ist, und
- eine zweite stückweise affine Funktion, die definiert ist durch :
· durch ein drittes Geradensegment, das durch ein Verhältnis zwischen einem max. Pfeil und einer Sehne am Schaufelfuß gleich 17% und ein Verhältnis zwischen einem max. Pfeil und einer Sehne in halber Schaufelhöhe gleich 5,7% definiert ist, und
· durch ein viertes gerades Segment, das durch ein Verhältnis zwischen einem max. Pfeil und einer Sehne in halber Schaufelhöhe gleich 5,7% und ein Verhältnis zwischen einem max. Pfeil und einer Sehne am Schaufelkopf gleich 5,7% definiert ist.

8. Rotorschaufel einer Turbomaschine nach einem der vorhergehenden Ansprüche, bei der die Höhenänderung des Verhältnisses zwischen dem max. Pfeil und der Sehne eine stückweise affine Funktion ist, die durch zwei Geradensegmente einerseits zwischen dem Fuß und der halben Höhe der Schaufel und andererseits zwischen der halben Höhe und dem Schaufelkopf definiert wird.

9. Turbomaschinenrotorschaufel nach einem der vorhergehenden Ansprüche, bei der das Verhältnis zwischen einem max. Pfeil fund einer Sehne eines Abschnitts der Schaufel abnimmt, wenn die Höhe des Abschnitts vom Schaufelfuß zur Schaufelmitte hin zunimmt, und dann einen nahezu konstanten Wert des Verhältnisses zwischen einem max. Pfeil und einer Sehne zwischen der Schaufelmitte und dem Schaufelkopf beibehält.

10. Turbomaschinengebläse mit einer Vielzahl von Rotorschaufeln nach einem der vorhergehenden Ansprüche.

11. Turbomaschine, **dadurch gekennzeichnet, dass** sie ein Gebläse nach Anspruch 10 aufweist.

## Claims

1. A turbomachine rotor blade comprising a plurality of blade sections stacked along a Z axis between a blade root and a blade tip defining the blade height therebetween, each blade section having a leading edge (21), a trailing edge (22), a pressure side (19), and a suction side (18), the blade sections having a chord (25) defined by the length of a chord line which is the segment connecting the leading edge (1) and the trailing edge (2) and a maximum sweep (28) defined by the maximum length of a segment perpendicular to the chord line and connecting a point on the chord line and a point on a camber line formed by all points located at equal distance from the upper surface (18) and the lower surface (19) in the section, **characterized in that** :
- the ratio between the maximum sweep and the chord at mid-blade height is between 25% and 40% of the ratio between a maximum sweep and a chord at the foot of the blade,
- the ratio between a maximum sweep and a chord at the blade tip is between 25% and 40% of the ratio between a maximum sweep and a chord at the blade root.

2. A turbomachine rotor blade according to claim 1 in which the ratio between a maximum sweep and a chord at mid-blade height is between 30% and 35%, and is preferably of the order of one third of the ratio between a maximum sweep and a chord at the blade root.

3. A turbomachine rotor blade according to claim 1 or 2 in which the ratio between a maximum sweep and a chord at the blade tip is between 30% and 35%, and is preferably of the order of one third of the ratio between a maximum sweep and a chord at the blade root.

4. A turbomachine rotor blade according to any one of the preceding claims in which the ratio between a maximum sweep and a chord at the blade root is between 10% and 20%, and preferably between 14% and 17%.

5. A turbomachine rotor blade according to any one of the preceding claims in which the ratio between a maximum sweep and a chord at mid-blade height is between 4% and 7%, preferably between 4.7% and 5.7%.

6. A turbomachine rotor blade according to any one of the preceding claims wherein the ratio between a maximum sweep and a chord at the blade tip is between 4% and 7%, preferably between 4.7% and 5.7%.

7. A turbomachine rotor blade according to any one of the preceding claims in which the variation along the height of the ratio between the maximum sweep and the chord of each section of the blade is between:
- a first piecewise affine function defined :
· by a first straight line segment defined by a ratio between a maximum sweep and a chord at the foot of the blade equal to 14% and a ratio between a maximum sweep and a chord at half blade height equal to 4.7%, and
· by a second straight line segment defined by a ratio between a maximum arrow and a chord at mid-blade height equal to 4.7% and a ratio between a maximum arrow and a chord at blade tip equal to 4.7%, and
- a second piecewise affine function defined by :
· by a third straight line segment defined by a ratio between a maximum sweep and a chord at the blade root equal to 17% and a ratio between a maximum sweep and a chord at mid-blade height equal to 5.7%, and
· by a fourth straight line segment defined by a ratio between a maximum arrow and a chord at mid-blade height equal to 5.7% and a ratio between a maximum arrow and a chord at blade tip equal to 5.7%.

8. Turbomachine rotor blade according to any one of the preceding claims in which the variation according to height of the ratio between maximum sweep and chord is a piecewise affine function defined by two straight line segments on the one hand between the root and the blade mid-height, on the other hand between the mid-height and the blade tip.

9. A turbomachine rotor blade according to any one of the preceding claims in which the ratio between a maximum sweep and a chord of a section of the blade decreases as the height of the section increases from the blade root to the blade mid-height, and then keeps a quasi-constant value of the ratio between a maximum sweep and a chord between the blade mid-height and the blade head.

10. A turbomachinery fan having a plurality of rotor blades according to any one of the preceding claims.

11. A turbomachine **characterized in that** it includes a fan according to claim 10.
